# NEUE EUROPÄISCHE PATENTSCHRIFT

(11) **EP 1 532 046 B2**
(45) Veröffentlichungstag und Bekanntmachung des Hinweises auf die Entscheidung über den Einspruch: **20.01.2016**
(45) Hinweis auf die Patenterteilung: 24.05.2006
(21) Anmeldenummer: 04712533.1
(22) Anmeldetag: 19.02.2004
(51) Int. Cl.: B64D 11/00, G09F 13/20

(54) **NOTBELEUCHTUNG IN EINEM MEHRSTÖCKIGEN FLUGZEUG**
EMERGENCY LIGHT IN A MULTILEVEL AEROPLANE
ECLAIRAGE D'URGENCE DANS UN AVION A PLUSIEURS ETAGES

(30) Priorität: 25.02.2003 EP 03004089
(43) Veröffentlichungstag der Anmeldung: 25.05.2005
(73) Patentinhaber: Lufthansa Technik AG, 22335 Hamburg (DE)
(72) Erfinder: LIEROW, Hans-Christian, 22339 Hamburg (DE)
(74) Vertreter: Glawe, Delfs, Moll
(86) Internationale Anmeldenummer: PCT/EP2004/001647
(87) Internationale Veröffentlichungsnummer: WO 2004/076280

(56) Entgegenhaltungen:
- EP-A1- 0 514 650
- EP-A1- 0 514 650
- EP-B1- 0 828 657
- WO-A1-01/52224
- US-A- 5 724 909
- US-A- 5 775 016
- US-B1- 6 207 077
- US Department of Transportation, Entwurf "Low-Level Lighting (LLL) resolution" vom February 1992
- PSPA Standard 002 Part 2 von 1993
- STRAUSS J.L.: 'The Evacuation Problem and Glow-In-The-Dark Escape Systems' CAUTION MAGAZINE April 1985,
- BRE (Building Research Estabilsment): Veröffentlichung mit dem Titel "Photoluminescent markings for escape routes" von Webber et al., September 1989
- Advisory Circular, AC No.: 25.812-2, der FAA vom 24.07.1997
- Fotografie einer Treppe an Bord einer Boeing B747-400
- Prospekt der Lufthansa Technik "Guideline® ColourFit", aus dem Jahr 2009
- Auszug der Boeing Website
- Auszug des Boeing "Parts Catalog (Maintenance)" vom Dezember 2002
- Auflistung der Lufthansa B747 Flotte gemäß "ACAS Fleet Report" 2 Fototgrafien einer Boeing 747 Treppe auf der Airliners.net Website, jeweils von Neil Joseph undJoe Corrigan. Die Internetadressen der Fotos scheinen im Telefax vom 17.11.2011 falsch wiedergegeben worden zu sein. Vermutlich handelt es sich um die folgenden beiden Adressen (jeweils eine Kopie der Internetseiten ist im Anhang beigefügt): http://www.airliners.net/photo/Japan-Airlin es-/Boeing-747-346SR/0311005/M/ http://www.airliners.net/photo/United-Airli nes/Boeing-747-422/0015118/M/

## Beschreibung

Die Erfindung betrifft ein Flugzeug mit mehreren übereinander angeordneten Decks für Passagiere, Fracht und/oder Besatzung und mindestens einer Decks verbindenden Treppe gemäß dem Oberbegriff von Anspruch 1.

In Flugzeugen ist es bekannt, in den Gängen linienförmig Leuchten anzuordnen, die im Notfalle eingeschaltet werden, um den Passagieren den Weg zum Notausgang zu zeigen. Diese Systeme werden zwar von einer getrennten Notstrombatterie gespeist, so dass die Markierungen auch im Falle des Versagens der übrigen Bordelektrik funktionieren. Auch die Notstromversorgung kann aber beschädigt werden, so dass die Markierung im Notfall nicht mehr eingeschaltet werden können. Auch können Abschnitte der Markierungen nicht betreibbar sein, was vor dem Start des Flugzeugs ein Auswechseln erforderlich macht, was wiederum zu Startverzögerungen und Verspätungen Anlass gibt.

Es ist bekannt, zur Vermeidung dieser Nachteile am Fußboden seitlich an den Gängen Leuchtstreifen oder -leisten mit photoluminiszenten Stoffen anzubringen, die im Notfall auch bei Versagen der Elektrik des Flugzeugs den Passagieren den Weg zum Ausgang weisen können (EP 0 828 657 B1). Die photoluminiszenten Materialien haben die Eigenschaft, auch einige Zeit, nachdem sie nicht mehr beleuchtet werden, noch selbst zu leuchten.

Es ist ein Flugzeug mit mehreren übereinander angeordneten Decks für Passagiere, Fracht- und/oder Besatzung und mindestens einer Decks verbindenden Treppe bekannt, die mit photoluminiszenten leisten- oder streifenförmigen Markierungen versehen ist, die auf den Treppenstufen beidseitig an deren seitlichen Enden angeordnet sind (US-A-5 775 016).

Der Erfindung liegt die Aufgabe zugrunde, ein Flugzeug der eingangs genannten Art so auszurüsten, dass alle Passagiere/Besatzungsmitglieder, also auch Passagiere und Besatzungsmitglieder, die sich in verschiedenen Decks befinden, den Weg zu einem Notausgang sicher finden.

Die erfindungsgemäße Lösung besteht darin, dass von oben sichtbare im wesentlichen ununterbrochene Markierungen seitlich von den Stufen, der Steigung der Treppe folgend, angeordnet sind, die als auf den Oberkanten der Wandungen angebrachte streifenförmige photoluminiszente Markierungen ausgebildet sind. Diese geneigten geraden Markierungen leiten die Passagiere psychologisch besonders günstig in die richtige Richtung. Gleichzeitig erkennen die Passagiere auch in Notsituationen und schlechten Sichtbedingungen zwei verschiedene konvergierende Linien bzw. Linienscharen, wobei die durchgehenden und die auf den Treppenstufen angeordneten Markierungen in einem Winkel zueinander angeordnet sind, wenn sowohl die Markierungen auf den seitlichen Enden der Stufen als auch die geradlinigen Schrägen der Steigen der Stufen folgenden Markierungen vorgesehen sind. Der Passagier erkennt auf diese Weise sofort, dass er es mit einer Treppe und nicht etwa einem Gang zu tun hat. Dies kann auch ganz wesentlich sein, wenn das Flugzeug nach einem Unfall nicht mehr horizontal ausgerichtet ist.

Im Falle von Rauchentwicklungen, Brand oder anderen panikfördernden Situationen kommt es natürlich ganz wesentlich darauf an, die Passagiere möglichst sicher zum Ausgang zu führen. Hier kann die über den Stand der Technik hinausgehende Maßnahme, die auf den ersten Blick vielleicht nicht in ihrer Bedeutung erkannt wird, von ganz entscheidender Wichtigkeit sein.

Falls die Treppe einen Treppenabsatz aufweist, so sind zweckmäßiger Weise auch im Bereich des Treppenabsatzes Markierungen vorgesehen.

Es kann weiter zweckmäßig sein, Markierungen unterschiedlicher Farbe und Leuchtkraft zu verwenden. Durch solche anders gearteten Markierungen kann zum Beispiel besonders auf den Anfang der Treppe, das Ende der Treppe oder einen Absatz hingewiesen werden.

Die Erfindung kann wie erwähnt bei Treppen mit oder ohne Absatz verwendet werden.

Auf den Markierungen sind zweckmäßigerweise Hinweise wie Pfeile, andere Symbole oder Beschriftungen wie "EXIT", "STAIRS" und dergleichen vorgesehen.

Die Erfindung wird im folgenden anhand von vorteilhaften Ausführungsformen unter Bezugnahme auf die beigefügten Zeichnungen beispielsweise beschrieben. Es zeigen:
- Fig. 1: in perspektivischer Ansicht einen Abschnitt einer in einem Flugzeug angeordneten Treppe; und
- Fig. 2: eine andere Ausführungsform einer solchen Treppe.

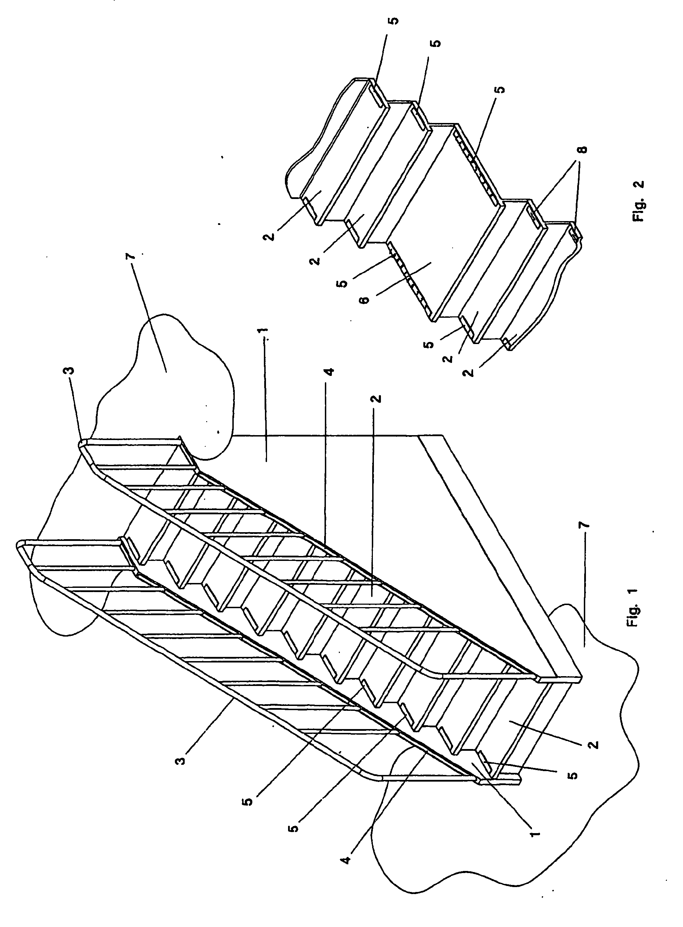

Die in Figur 1 gezeigte Treppe, die zwei bei 7 angedeutete Decks verbindet, weist seitliche Wandungen 1 auf, zwischen denen die Stufen 2 der Treppe angeordnet sind. Die Wandungen 1 ragen bei der in Figur 1 gezeigten Ausführungsform noch oben über die Stufen 2 hinaus. Auf ihnen sind Geländer 3 befestigt. Auf den Oberkanten der Wandungen 1 sind streifenförmige photoluminiszente Markierungen 4 angebracht. Diese "laden sich" mit Licht während des normalen Betriebs des Flugzeugs auf, wenn die Beleuchtung im Flugzeug eingeschaltet ist. Wird die Beleuchtung ausgeschaltet oder fällt sie wie im Notfall aus, so haben die photoluminiszenten Markierungen die Eigenschaft, noch eine gewisse Zeit nachzuleuchten, so dass sie Passagieren den Weg zum Ausgang zeigen können.

Markierungen 4 sind aber nicht nur auf den Wandungen 1 vorgesehen, sondern auch an den seitlichen Enden der Stufen 2. Diese Markierungen sind in Figur 1 mit der Bezugsziffer 5 bezeichnet. Die geradlinig verlaufenden schräg abfallenden Markierungen 4 bilden einen Winkel mit den auf den Stufen 2 angeordneten Markierungen 5, so dass der Passagier sofort erkennen kann, dass er es mit einer Treppe zu tun hat.

Bei der in Figur 2 gezeigten Ausführungsform weist die Treppe zusätzlich zu den Stufen 2 auch einen Absatz 6 auf. Sowohl die Stufen 2 als auch der Absatz 6 sind dabei durch seitliche photoluminiszente Markierungen 5 gekennzeichnet. Dabei weisen die Markierungen 5 im Bereich des Absatzes 6 eine andere Farbe und/oder Leuchtkraft auf, was in Figur 2 durch eine Strichelung angedeutet ist. Durch diesen Unterschied in der Farbe und/oder der Leuchtkraft wird deutlicher gemacht, dass hier ein Absatz vorhanden ist. Gerade im Notfall mit der stressbedingten oder sogar panikartigen Situation kann dieses besondere Merkmal von besonderer Bedeutung sein. Bei 8 sind noch Hinweise wie Pfeile, Beschriftungen und dergleichen auf den Markierungen 5 angedeutet.

## Patentansprüche

1. Flugzeug mit mehreren übereinander angeordneten Decks (7) für Passagiere, Fracht und/oder Besatzung und mindestens einer Decks verbindenden Treppe (1,2,3) mit seitlichen Wandungen (1), die nach oben über die Stufen (2) hinausragen, auf denen Geländer (3) befestigt sind, und zwischen denen die Stufen (2) der Treppe angeordnet sind, wobei die Treppe mit photoluminiszenten leisten- oder streifenförmigen Markierungen (4,5) versehen ist, die auf den Treppenstufen (2) beidseitig an deren seitlichen Enden angeordnet sind, **dadurch gekennzeichnet, dass** von oben sichtbare im wesentlichen ununterbrochene Markierungen (4) an den Seiten der Stufen (2), der Steigung der Treppe (1,2,3) folgend angeordnet sind, die als auf den Oberkanten der Wandungen (1) angebrachte streifenförmige photoluminiszente Markierungen (4) ausgebildet sind.

2. Flugzeug nach Anspruch 1, **dadurch gekennzeichnet, dass** die Treppe (1,2,3) einen Treppenabsatz (6) aufweist und im Bereich des Treppenabsatzes (6) Markierungen (5) vorgesehen sind.

3. Flugzeug nach einem der Ansprüche 1 oder 2, **dadurch gekennzeichnet, dass** Markierungen (4,5) unterschiedlicher Farben und/oder Leuchtkraft verwendet werden.

4. Flugzeug nach einem der Ansprüche 1 bis 3, **dadurch gekennzeichnet, dass** die Markierungen (4,5) Hinweise wie Pfeile, andere Symbole oder Beschriftung aufweisen.

## Claims

1. Aeroplane having a plurality of decks (7), arranged one on top of the other, for passengers, freight and/or crew and at least one staircase (1, 2, 3), which connects the decks, with sidewalls (1) which overlap the top of the stairs (2) and the stairs (2) are placed between the sidewalls of the staircase, in which the staircase is provided with photoluminescent rail- or strip-like markers (4, 5) which are arranged on both sides of the staircase steps (2) at the lateral ends thereof, **characterized in that** markers (4), which can be seen from above and are essentially uninterrupted, are arranged at the sides of the steps (2), following the ascent of the staircase (1, 2, 3) and are formed as photoluminescent strip-like markers (4) fitted on the upper edges of the walls (1).

2. Aeroplane according to Claim 1, **characterized in that** the staircase (1, 2, 3) has a landing (6), and markers (5) are provided in the region of the landing (6).

3. Aeroplane according to either of Claims 1 and 2, **characterized in that** markers (4, 5) having different colours and/or luminosity are used.

4. Aeroplane according to one of Claims 1 to 3, **characterized in that** the markers (4, 5) have indicators such as arrows, other symbols or writing.

## Revendications

1. Avion ayant une pluralité d'étages (7), agencés les uns sur les autres, pour les passagers, la marchandise et/ou l'équipage et au moins un escalier (1, 2, 3) qui raccorde les étages, avec des parois latérales (1) qui recouvrent la partie supérieure des marches (2) et les marches (2) sont placées entre les parois latérales de l'escalier, dans lequel l'escalier est doté de marqueurs photoluminescents en forme de rail ou de bande (4, 5) qui sont agencés des deux côtés des marches d'escalier (2) au niveau de leurs extrémités latérales,
**caractérisé en ce que** les marqueurs (4), qui peuvent être observés depuis le dessus et sont essentiellement non interrompus, sont agencés au niveau des côtés des marches (2), suite à l'ascension de l'escalier (1, 2, 3) et sont formés comme des marqueurs photoluminescents en forme de bande (4) montés sur les bords supérieurs des parois (1).

2. Avion selon la revendication 1, **caractérisé en ce que** l'escalier (1, 2, 3) a un palier (6) et des marqueurs (5) sont prévus dans la région du palier (6).

3. Avion selon les revendications 1 et 2, **caractérisé en ce que** l'on utilise des marqueurs (4, 5) ayant des couleurs différentes et/ou une luminosité différente.

4. Avion selon l'une des revendications 1 à 3, **caractérisé en ce que** les marqueurs (4, 5) ont des indicateurs tels que des flèches, d'autres symboles ou écriture.
